# EUROPEAN PATENT APPLICATION

(11) **EP 2 131 368 A1**
(43) Date of publication of application: **09.12.2009**
(21) Application number: 09157788.2
(22) Date of filing: 09.04.2009
(51) Int. Cl.: G11B 33/02, G11B 33/06, G11B 33/12

(54) **Hard disk drive docking station**

(30) Priority: 02.06.2008 TW 97209677 U
(71) Applicant: Huang, Jui-Shu, Taoyuan 335 (TW)
(72) Inventor: Huang, Jui-Shu, Taoyuan 335 (TW)
(74) Representative: Schlief, Thomas P.

(57) **Abstract**

A hard disk drive (HDD) docking station includes a housing (2) having a push-plate opening (21); a HDD support provided in the housing (2) for supporting a HDD therein; a plate member (42) mounted near a bottom in the housing (2) and connected at a first edge to a fulcrum (41); a mating connector seat (43) connected to the plate member (42) for engaging with a connector (11) provided on the HDD; a restoring spring (44) normally pushing the plate member (42) upward; a pivot shaft (451) turnably connecting a supporting member (45) to a second edge of the plate member (42) opposite to the fulcrum (41); and a push plate (46) extended from the second edge of the plate member (42) to partially project from the push-plate opening (21). When the push plate (46) is downward pushed, the plate member (42) is caused to pivotally turn downward about the fulcrum (41), so that the mating connector seat (43) is also moved downward to separate from the HDD connector (11).

## Description

### FIELD OF THE INVENTION

The present invention relates to a hard disk drive (HDD) docking station, and more particularly to a hard disk drive docking station that employs lever action for a user to separate a plugged hard disk drive from the docking station in an effortless manner.

### BACKGROUND OF THE INVENTION

With a conventional hard disk drive (HDD) docking station, a HDD plugged therein is unplugged by pushing or pull the HDD upward. The force a user applies to unplug the HDD must be larger than the weight of the HDD. Therefore, it is laborious for the user to unplug the HDD from the conventional HDD docking station.

China Patent Application No. 200720195554.7 discloses a HDD docking station, which includes an actuator and a pushing mechanism connected to the actuator. The actuator can be a push button, for example. The pushing mechanism includes a rotary shaft, and a push plate connected to and extended across the rotary shaft. A portion of the push plate located at one side of the rotary shaft is provided with an upward push plate in contact with a HDD plugged in the docking station, and another portion of the push plate located at the other side of the rotary shaft is provided with a downward push plate in contact with the actuator. When the actuator is depressed, the push plate is turned about the rotary shaft for the upward push plate to move upward and thereby push the HDD upward to separate from a connector provided in the docking station. With the above arrangements, it is apparently a user has to make a relatively large effort to push the HDD upward.

It is therefore desirable to develop an improved HDD docking station that allows a user to effortlessly separate a plugged HDD from the docking station.

### SUMMARY OF THE INVENTION

A primary object of the present invention is to provide a hard disk drive docking station that employs lever action for a user to separate a plugged HDD from the docking station in an effortless manner by applying only a force slightly larger than a frictional force between the HDD and a mating connector seat in the docking station.

Another object of the present invention is to provide a hard disk drive docking station that includes a top cover, which is provided at a predetermined position with a small opening corresponding to a 2.5" HDD, so that either a 3.5" or a 2.5" HDD can be plugged in the docking station.

To achieve the above and other objects, the HDD docking station of the present invention includes a housing having a push-plate opening; a HDD support provided in the housing for supporting a HDD therein; a plate member mounted near a bottom in the housing and connected at a first edge to a fulcrum; a mating connector seat connected to the plate member for engaging with a connector provided on the HDD; a restoring spring normally pushing a second edge of the plate member upward; a pivot shaft turnably connecting a supporting member to the second edge of the plate member; and a push plate extended from the second edge of the plate member to partially project from the push-plate opening. When the push plate is downward pushed at the push-plate opening, the plate member is caused to pivotally turn downward about the fulcrum, so that the mating connector seat is also moved downward to separate from the HDD connector.

Therefore, with the leverage provided therein, the HDD docking station of the present invention is superior to the conventional HDD docking stations because the user can separate a plugged HDD from the docking station only by applying a downward force slightly larger than a frictional force between the plugged HDD and the mating connector seat without the need of exerting force to raise the relatively heavy HDD to separate it from the docking station.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a hard disk drive docking station of the present invention with a 3.5" hard disk drive plugged therein;
Fig. 2 is an exploded view of Fig. 1;
Fig. 3 is a sectional view taken along line 3-3 of Fig. 1;
Fig. 4 is a fragmentary side view of the hard disk drive docking station of the present invention before a push plate thereof is downward pushed;
Fig. 5 is a fragmentary side view of the hard disk drive docking station of the present invention after the push plate thereof is downward pushed;
Fig. 6 is a perspective view showing part of a base board for the hard disk drive docking station of the present invention; and
Fig. 7 is a perspective view of the hard disk drive docking station of the present invention with a 2.5" hard disk drive plugged therein.

### DETAILED DESCRIPTION OF THE PREFERRED EMBODIMENTS

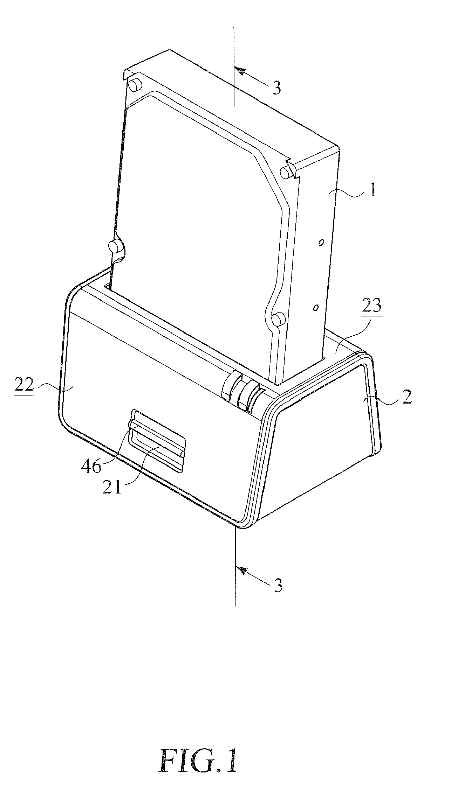

Please refer to Fig. 1, which is a perspective view of a hard disk drive docking station according to a preferred embodiment of the present invention. The hard disk drive docking station of the present invention includes a housing 2 having a rear face 22 and a top face 23. The rear face 22 is provided with a push-plate opening 21, via which a push plate 46 is partially outward projected. A 3.5" hard disk drive 1 can be plugged in the hard disk drive docking station from the top face 23, and can be separated from the hard disk drive docking station by downward pushing the push plate 46.

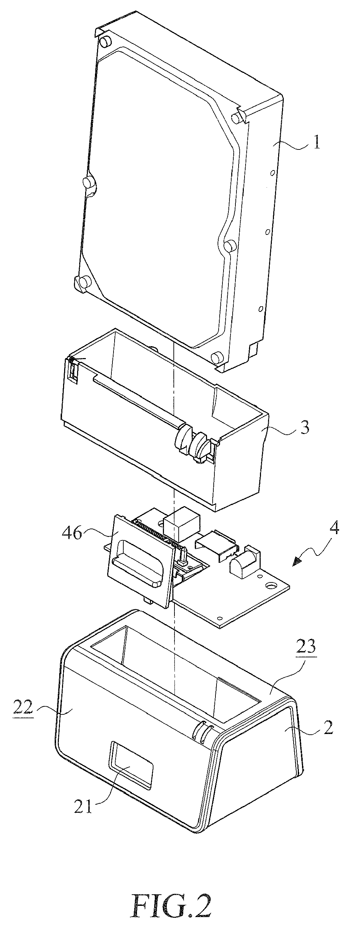

Please refer to Fig. 2 that is an exploded view of Fig. 1. An open-topped hard disk drive support 3 being sized corresponding to a 3.5" hard disk drive is provided in the housing 2 to locate below and connect to the top face 23. The 3.5" hard disk drive 1 downward plugged in the hard disk drive docking station is supported and held in place by the hard disk drive support 3. A base board 4 is mounted in an inner space defined by the housing 2 to locate near a bottom of the housing 2.

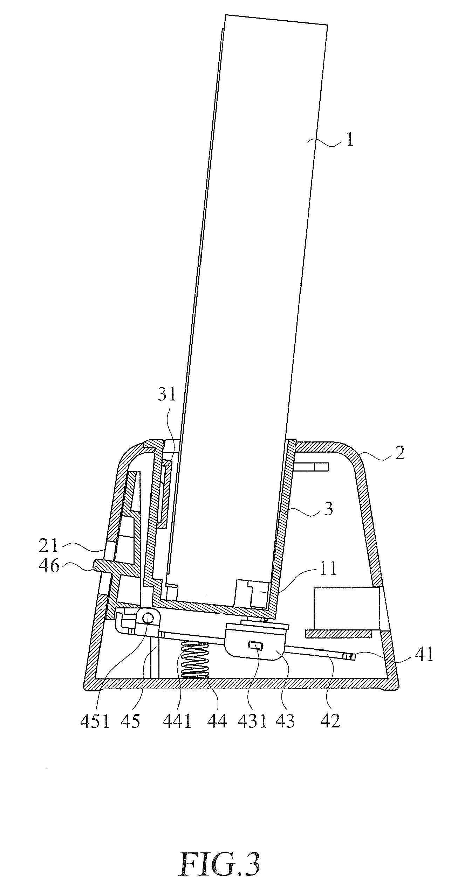

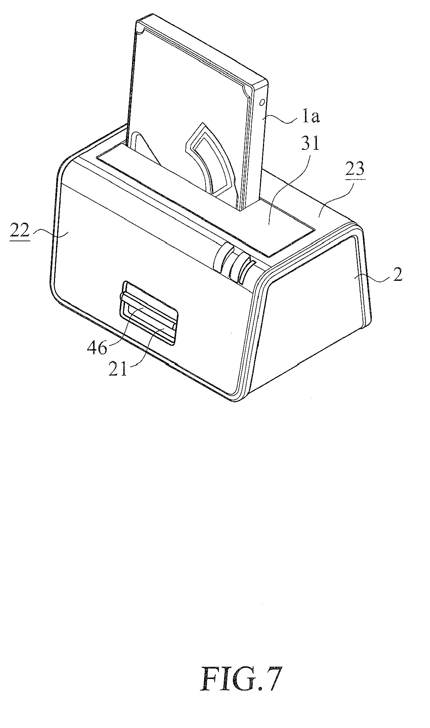

Fig. 3 is a sectional view taken along line 3-3 of Fig. 1. Please refer to Fig. 3. The 3.5" hard disk drive 1 is plugged in the hard disk drive support 3 via an openable top cover 31 which is pivotally connected at one edge to one side of the open-topped hard disk drive support 3. A connector 11 provided on the hard disk drive 1 is engaged with a mating connector seat 43 which is adapted to engage with not only the connector 11 on the 3.5" hard disk drive 1, but also a connector on a 2.5" hard disk drive 1 a, as shown in Fig. 7. A plate member 42 is connected at a first edge to a fulcrum 41 provided on the base board 4. The mating connector seat 43 is connected to the plate member 42 via a connection fulcrum 431, such that the mating connector seat 43 can have a deflection angle relative to a plane of the plate member. Therefore, when displacing upward or downward along with the plate member 42, the mating connector seat 43 can move at an angle the same as that of the connector 11 of the hard disk drive 1. A restoring spring 44 is mounted to a lower face 441 of the plate member 42 for normally pushing the plate member 42 upward. A supporting member 45 is turnably connected at an upper end to a pivot shaft 451. The push plate 46 is extended from a second edge of the plate member 42 opposite to the fulcrum 41, and has a portion sideward projected from the push-plate opening 21 formed on the housing 2.

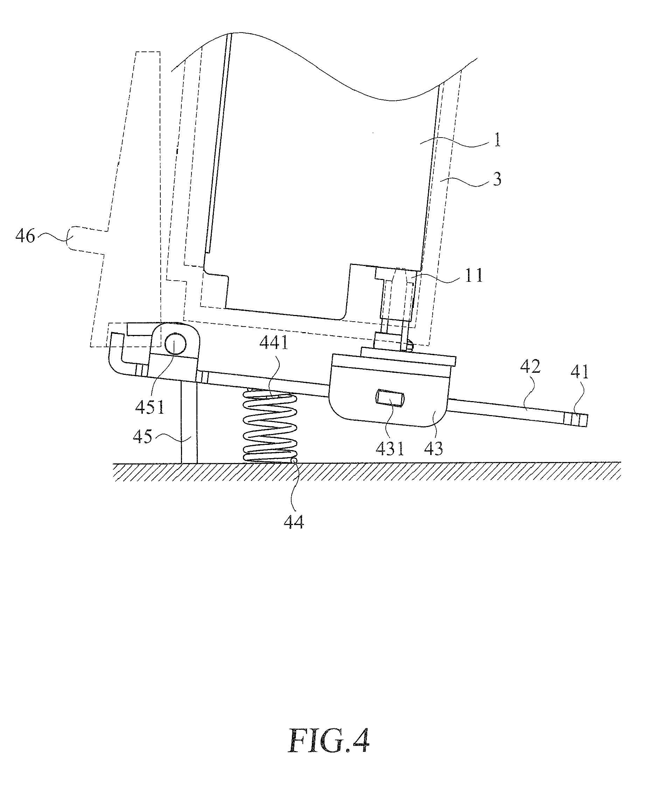

Please refer to Fig. 4, which is a fragmentary side view showing the hard disk drive docking station of the present invention before the push plate 46 is downward pushed. When the push plate 46 is not downward pushed, the restoring spring 44 is in a released state, and the supporting member 45 is in an upright position to support and thereby hold the second edge of the plate member 42 to a high position.

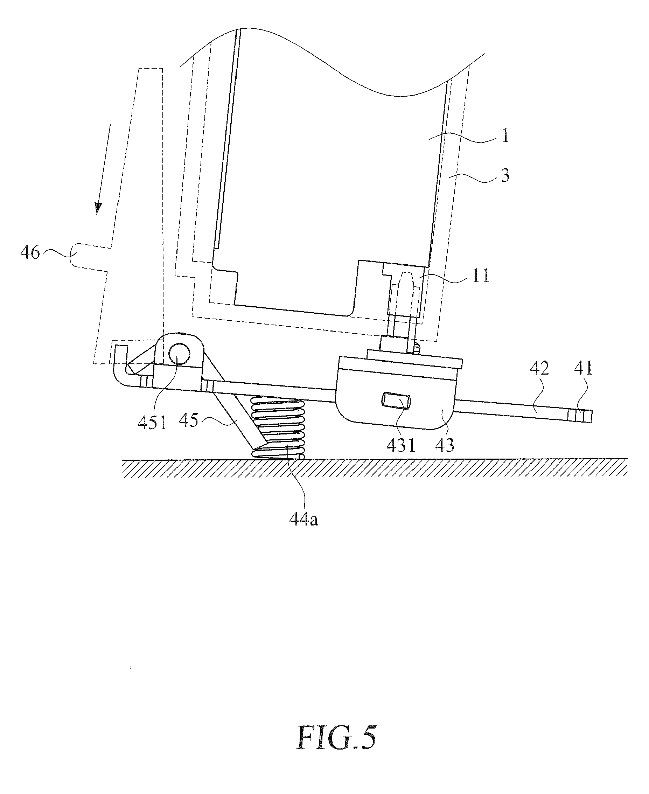

Fig. 5 is a fragmentary side view showing the hard disk drive docking station of the present invention after the push plate 46 is downward pushed. When the push plate 46 is downward pushed at the push-plate opening 21, the supporting member 45 is caused to pivotally turn about the pivot shaft 451 and the restoring spring 44 is compressed and now denoted by 44a. As a result, the pivotally turned supporting member 45 and the compressed restoring spring 44 no longer support the plate member 42 to the high position, causing the second edge of the plate member 42 to move downward to a low position.

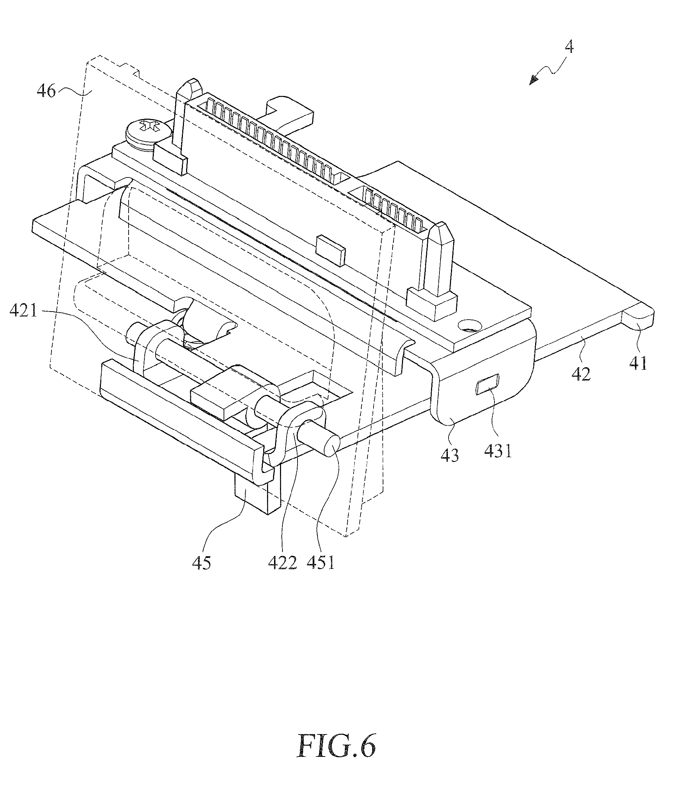

Fig. 6 is an assembled perspective view showing part of the structure of the base board 4 at the plate member 42, the mating connector seat 43, the supporting member 45, and the push plate 46. As can be clearly seen from Fig. 6, the plate member 42 is connected at the first edge to the fulcrum 41, and is provided at the second edge with a first lug 421 and a second lug 422. The pivot shaft 451 is extended through the first and the second lug 421, 422 to thereby connect to the plate member 42. The supporting member 45 is connected at the upper end to a position on the pivot shaft 451 between the first and the second lug 421, 422. The push plate 46 is connected to an extended portion at the second edge of the plate member 42.

Fig. 7 shows the hard disk drive docking station of the present invention with a 2.5" hard disk drive 1 a plugged in the housing 2 from the top face 23. The top cover 31 is provided at a predetermined position with a small opening corresponding to the 2.5" hard disk drive 1a, so that the 2.5" hard disk drive 1 a can be plugged in the housing 2 via the small opening. When the 3.5" hard disk drive 1 is plugged in, the top cover 31 is pushed by the 3.5" hard disk drive 1 to pivotally turn inward and attach to an inner wall surface of the hard disk drive support 3, as shown in Fig. 3. However, when the 2.5" hard disk drive 1 a is plugged in via the small opening, the top cover 31 does not move and keeps closing the open-topped hard disk drive support 3.

Although the present invention has been described with reference to the preferred embodiments thereof, as well as the best mode for carrying out the present invention, it is apparent to those skilled in the art that a variety of modifications and changes may be made without departing from the scope of the present invention which is intended to be defined by the appended claims.

## Claims

1. A hard disk drive docking station, **characterized in that** the hard disk drive docking station comprises:
a housing (2) defining an inner space and being formed on one side face with a push-plate opening (21);
an open-topped hard disk drive support (3) being sized corresponding to a hard disk drive (1) and provided in the housing (2) to locate below and connect to a top face (23) of the housing (2) for supporting and holding a hard disk drive (1) therein;
a plate member (42) being mounted in the inner space of the housing (2) with a first edge supported on a fulcrum (41);
a mating connector seat (43) being connected to a predetermined position on the plate member (42) to locate below the hard disk drive support (3), such that when a hard disk drive (1) is plugged in the hard disk drive support (3), a connector (11) provided on the hard disk drive (1) is fitly engaged with the mating connector seat (43);
a restoring spring (44) being mounted to a lower face of the plate member (42) to normally push the plate member (42) upward; and
a push plate (46) being extended from a second edge of the plate member (42) opposite to the fulcrum (41) to partially outward project from the push-plate opening (21) on the housing (2);
wherein when the push plate (46) is downward pushed at the push-plate opening (21), the plate member (42) is caused to pivotally downward turn about the fulcrum (41), and the mating connector seat (43) is moved downward along with the plate member (42) to thereby separate from the connector (11) provided on the hard disk drive (1).

2. The hard disk drive docking station as claimed in claim 1, further comprising a top cover (31) pivotally connected at one edge to one side of the open-topped hard disk drive support (3), and the top cover (31) being provided at a predetermined position with a small opening corresponding to a 2.5" hard disk drive (1), so that either a 3.5" hard disk drive or a 2.5" hard disk drive can be plugged in the hard disk drive support (3).

3. The hard disk drive docking station as claimed in claim 1, **characterized in that** the mating connector seat (43) is connected to the plate member (42) via a connection fulcrum (41), such that the mating connector seat (43) can have a deflection angle relative to a plane of the plate member (42) when the plate member (42) is pivotally turned downward.

4. The hard disk drive docking station as claimed in claim 1, further comprising a supporting member (45) being pivotally turnably connected to the lower face of the plate member (42) via a pivot shaft (451), and being located adjacent to the push plate (46).
